# EUROPÄISCHE PATENTSCHRIFT

(11) **EP 2 659 349 B1**
(45) Veröffentlichungstag und Bekanntmachung des Hinweises auf die Patenterteilung: **11.07.2018**
(21) Anmeldenummer: 11815757.7
(22) Anmeldetag: 23.12.2011
(51) Int. Cl.: G06F 3/06, G06F 17/30, G06F 11/14

(54) **VERFAHREN ZUM ZURÜCKSETZEN EINES DATEISYSTEMS**
METHOD FOR RESETTING A FILE SYSTEM
PROCÉDÉ POUR RÉINITIALISER UN SYSTÈME DE FICHIERS

(30) Priorität: 28.12.2010 DE 102010056424
(43) Veröffentlichungstag der Anmeldung: 06.11.2013
(73) Patentinhaber: Giesecke+Devrient Mobile Security GmbH, 81677 München (DE)
(72) Erfinder: RANKL, Wolfgang, 81825 München (DE)
(86) Internationale Anmeldenummer: PCT/EP2011/006550
(87) Internationale Veröffentlichungsnummer: WO 2012/089329

(56) Entgegenhaltungen:
- EP-A1- 2 216 719
- ISO: "IDENTIFICATION CARDS -- INTEGRATED CIRCUIT CARDS -- PART 4: ORGANIZATION, SECURITY AND COMMANDS FOR INTERCHANGE ISO/IEC 7816-4", INTERNATIONAL STANDARD ISO/IEC, XX, XX, 5. Januar 2005 (2005-01-05), Seite 90, XP008077622,

## Beschreibung

Die Erfindung betrifft ein Verfahren zum Zurücksetzen eines Dateisystems eines tragbaren Datenträgers in einen Ausgangszustand.

Bei einem tragbaren Datenträger handelt es sich vorzugsweise um Datenträger mit entsprechenden Sicherheitsfunktionalitäten, wie z.B. Smart Cards, Chipkarten, Token, Massenspeicherkarten, Multimediakarte und/oder um elektronische Identitätsdokumente, wie beispielsweise einem elektronischen Personalausweis, einem Reisepass mit, auf einem Chip gespeicherten maschinenlesbaren Identifikationsdaten einer Person. Beispielsweise wird eine Chipkarte unter dem Begriff tragbarer Datenträger verstanden, wobei das Anwendungsgebiet der Chipkarte sehr vielfältig ist, beispielsweise als Kredit- oder Debit-Bezahlkarte, Gesundheitskarte, Zutrittsberechtigungskarte, Firmenausweis, Identifikationskarte, elektronischer Fahrzeugschein oder Führerschein. Insbesondere wird eine Teilnehmeridentifikationskarte, kurz SIM-Karte, zur Identifikation eines Teilnehmers in einem Mobilfunknetz unter dem Begriff tragbarer Datenträger verstanden.

Das Dateisystem eines Datenträgers umfasst gemäß der 5. Auflage des "Handbuch der Chipkarten" der Autoren Wolfgang Rankl und Wolfgang Effing, erschienen 2008 beim Carl Hanser Verlag Seite 502 ff im Punkt 13.7 "Dateiverwaltung" Verzeichnisdateien wie beispielsweise das Master File, kurz MF, oder Dedicated Files (DF) und einzelne Dateien, als Elementary Files, kurz EF. Das Dateisystem ist in einem wieder beschreibbaren nichtflüchtigen Speicherbereich, beispielsweise dem EEPROM oder FLASH-Speicher des Datenträgers abgelegt, sodass das Dateisystem auch nach einer Deaktivierung des Datenträgers verfügbar ist. Die Verwaltung und Organisation der Dateien in dem Dateisystem wird vom Betriebssystem des Datenträgers übernommen.

Bei einem objektorientierten Aufbau des Dateisystems weisen die Dateien einen Dateideskriptor auf, auch als Datei-Header bezeichnet, indem alle Informationen über die Datei selbst enthalten sind. Weiterhin weisen die Dateien den Dateiinhalt auf, auch als Datei-Body bezeichnet, indem die Nutzdaten der Datei enthalten sind.

Teile des Dateisystems heutiger Datenträger können zu Wartungszwecken, Neuerungen, Erweiterungen und/oder Fehlerbeseitigung nachträglich, das heißt nach Ausgabe des Datenträgers an einen Benutzer aktualisiert werden. Ein Teil des Dateisystems umfasst dabei beispielsweise eine Applikation mit einer Verzeichnisdatei DF und dazugehörigen Dateien EF. Ein Teil des Dateisystems ist beispielsweise eine Applikation zum Erhalt einer beliebigen Funktionalität.

Die Aktualisierung eines Dateisystems und den enthaltenen Dateien im Datenträgers kann dabei durch ein Kommando einer entfernten Instanz, bei SIM-Karten durch einen Aktualisierungsserver über eine Fernwartungsfunktion mittels OTA, kurz für over the air, durchgeführt werden. Alternativ kann ein zum Betrieb des Datenträgers notwendiges Endgerät eine ausstehende Aktualisierung vornehmen. Die Änderungen bzw. Aktualisierungen des Dateisystems betreffen dabei die Dateiinhalte einer einzelnen oder mehrerer Dateien in dem Dateisystem. Die Art, in der Aktualisierungen des Dateisystems auf dem Datenträger vorgenommen werden, ist im Stand der Technik hinlänglich bekannt und ist daher nicht Bestandteil dieser Anmeldung.

Es sind nun Situationen vorstellbar, in denen es notwendig ist die aktualisierten Dateien und Betriebssystemparameter in dem Dateisystem wieder auf den Ausgangszustand zurückzusetzen. Dies kann beispielsweise dann der Fall sein, wenn man seitens der entfernten Instanz nicht mehr weiß, welche Änderungen/ Aktualisierungen in welchen Teilen des Dateisystems im Detail vorgenommen worden sind. Auch wenn Änderungen/ Aktualisierungen von Dateien von Teilen des Dateisystems fehlerhaft waren oder durch die Änderungen/ Aktualisierungen der Teile des Dateisystems Fehler auftreten bzw. wenn die Änderungen/ Aktualisierungen nicht mehr zurückgesetzt werden können, ist ein Rücksetzen und anschließendes Betreiben des gesamten Datensystems im Ausgangszustand wünschenswert.

Ein Rücksetzen des Dateisystems ist realisierbar indem vor dem Aktualisieren der jeweiligen Datei eine Schattendatei mit dem ursprünglichen Dateiinhalt abgelegt wird, bevor diese Datei tatsächlich überschrieben wird. Soll nun ein Rücksetzen erfolgen, kopiert das Betriebssystem des Datenträgers diese Schattendateien zurück und überschreibt die aktualisierten Dateien.

Diese Lösung ist aber nur bedingt anwendbar, da momentan Schattendateien nur zu jeweils einem Teil des Dateisystems angelegt werden. Diese Schattendateien sind Bestandteil des Teils des Dateisystems und können vom Betriebsystem nicht für andere Teile des Dateisystems angewendet werden. Ein zweiter Teil des Dateisystems legt dann äquivalent ebenfalls Schattendateien bei Aktualisierung an. Somit kann es vorkommen, dass redundante Informationen abgelegt werden, die wertvollen Speicherplatz verschwenden.

Ein flexibles Zurücksetzen von verschiedenen Teilen des Dateisystems oder des gesamten Dateisystems ist mit diesem Verfahren nicht möglich bzw. sehr ineffektiv.

In der EP 2216719 A1 wird ein tragbarer Datenträger beschrieben, wobei der Datenträger eine Backup-Datei enthält. Diese Backup-Datei umfasst die ursprünglichen Dateiinhalte von geänderten Dateien. Dabei werden alle Änderungen in der Backup-Datei abgelegt. Wird eine Datei mehrfach aktualisiert, werden alle Dateiinhalte der Vorgängerversionen der Datei in der Backup-Datei abgelegt. Die entstehende Backup-Datei enthält eine Vielzahl von redundanten Einträgen, was zu einer ineffizienten Verwendung des Speichers des Datenträgers führt.

Der Erfindung liegt daher die Aufgabe zugrunde, den ursprünglichen Dateninhalt eines Dateisystems im Ausgangszustand einheitlich, erweiterbar und administrierbar abzuspeichern, sodass ein Zurücksetzen des Dateisystems bzw. von Teilen des Dateisystems in den Ausgangszustand sehr einfach und effektiv erfolgen kann.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Die Aufgabe wird im Hauptanspruch durch ein Verfahren zum Zurücksetzen eines Dateisystems eines tragbaren Datenträgers in einen Ausgangszustands gelöst, wobei im Dateisystem Dateien enthalten sind, jede Datei einen spezifischen Dateiinhalt beinhaltet und alle Dateien, die vor dem Zurücksetzen des Dateisystems einen vom Ausgangszustand des Dateisystems abweichenden Dateiinhalt erhalten haben, eine Kennzeichnung aufweisen. Im ersten Schritt des Verfahrens wird zunächst das Dateisystem nach Dateien mit der Kennzeichnung durchsucht. Anschließend wird der Dateiinhalt einer Datei mit Kennzeichnung mit einem ursprünglichen Dateiinhalt überschrieben. Dabei ist der ursprüngliche Dateiinhalt in einer Sicherungsdatei des Dateisystems abgelegt. Diese Sicherungsdatei beinhaltet die ursprünglichen Dateiinhalte aller gekennzeichneten Dateien des Dateisystems im Ausgangszustand.

Als ein Ausgangszustand des Dateisystems wird ein Zustand verstanden, der zu einem gewissen Zeitpunkt vor dem Rücksetzen des Dateisystems bestanden hat. Der Ausgangszustand kann beispielsweise der Auslieferungszustand des Datenträgers sein oder der Zustand des Datenträgers nach Personalisierung oder Initialisierung. Der Ausgangszustand kann auch an eine bestimmte Version einer Aktualisierung geknüpft sein, sodass das Dateisystem auf eine bestimmte Version am Tag X zurückgesetzt wird.

Damit ist in vorteilhafter Weise erreicht, dass alle ursprünglichen Dateiinhalte aller in dem Dateisystem aktualisierten Dateien in einer einzigen Sicherungsdatei abgelegt sind. Somit ist es ohne aufwendiges Anlegen von komplizierten Schattendateien möglich, den Zustand eines Dateisystems in den Ausgangszustand zurückzusetzen, wobei alle ursprünglichen Dateiinhalte zentral und wiederherstellbar abgelegt sind.

Insbesondere ist die Sicherungsdatei als eine BER-TLV Struktur angelegt. TLV steht für Tag- Length- Value und bezeichnet eine Art, Daten variabler Länge zu organisieren. Datenstrukturen fester Länge und Organisation neigen regelmäßig dazu, früher oder später zu eng oder zu beschränkt zu werden. Eine Lösung stellen TLV-Strukturen dar. Sie werden häufig mit der Abstract Syntax Notation One, kurz ASN.1, definiert. Die ASN.1 ist eine Sprache, mit der Datenstrukturen und ihre Kodierungen beschrieben werden können. In der Spezifikation [ISO/IEC8825] sind die Basic Encoding Rules, kurz BER für ASN.1 zusammengefasst. Die Sicherungsdatei in BER-TLV Struktur folgt daher diesen Regeln.

Bei der BER-TLV-Strukur werden alle ursprünglichen Dateiinhalte mit einer Kennzeichnung (Tag) und einer Längenangabe (Length) neben ihrem eigentlichen Dateiinhalt (Value) versehen und in der Sicherungsdatei abgelegt. Die Verwendung von Dateiinhalten mit variabler Länge ist auf diese Weise flexibler handhabbar.

Wenn das Dateisystem aktualisiert wird, erhalten der ursprüngliche Dateiinhalt sowie die aktualisierte Datei eine Kennzeichnung. Der ursprüngliche Dateiinhalt, der nun in die Sicherungsdatei geschrieben werden soll, wird nun mit den bereits in der Sicherungsdatei enthaltenen ursprünglichen Dateiinhalten verglichen. Stimmt die Kennzeichnung mit einem bereits bekannten Eintrag in der Sicherheitsdatei überein, dann wird der Inhalt entweder in den bekannten Eintrag eingepflegt oder der Inhalt wird geparst. Ist es dagegen eine unbekannte Kennzeichnung kann der Dateiinhalt recht einfach angehängt werden. Somit werden unnötige Doppeleinträge vermieden, wodurch der Speicherplatzbedarf reduziert wird.

In einer vorteilhaften Ausgestaltung werden die ursprünglichen Dateiinhalte der Sicherungsdatei vom Betriebssystem des Datenträgers verwaltet. Somit ist das Verfahren in der Lage, das gesamte Dateisystem auf einmal zurückzusetzen, wobei im Stand der Technik nur einzelne Teile des Dateisystems, beispielsweise einzelne Anwendungen zurückgesetzt werden können. Bei einer Interaktion mehrerer Anwendungen ist ein kontrolliertes Rücksetzen nun effektiver und besser möglich.

Bevorzugt werden auch Konfigurationsparameter des Betriebssystems des Datenträgers selbst beim Rücksetzen überschrieben. Somit werden nicht nur die Dateiinhalte zurückgesetzt, sondern auch wichtige Parameter zur Konfiguration des Betriebssystems, die bislang nicht beachtet werden konnten. Ähnlich wird mit allen anderen Dateien vorgegangen, die nicht in Teilen des Dateisystems als Dateien gespeichert sind, sondern intern vom Betriebssystem verwaltet werden. Diese Dateien sowie die Konfigurationsparameter des Chipkarten-Betriebssystems werden somit in Analogie verwaltet und eine kontrollierte Rücksetzung ist möglich.

Insbesondere erfolgt die Kennzeichnung der Datei bei Aktualisierung des Dateiinhalts der Datei, wenn durch die Aktualisierung der Dateiinhalt der aktualisierten Datei vom ursprünglichen Dateiinhalt der Datei im Ausgangszustand des Dateisystems abweicht. Somit ist sichergestellt, dass nur Dateiinhalte in der Sicherheitsdatei abgelegt sind, die tatsächlich vom Ausgangszustand des Dateisystems abweichen. In vorteilhafter Weise erfolgt die Kennzeichnung im Dateideskriptor der Datei selbst, sodass die Kennzeichnung leicht während des Durchsuchens des Dateisystems gefunden werden kann.

Vorzugsweise besteht das Dateisystem aus Verzeichnisdateien und den Dateien. Die Sicherungsdatei beinhaltet alle ursprünglichen Dateiinhalte aller gekennzeichneten Dateien innerhalb einer oder aller Verzeichnisdatei im Ausgangszustand, sodass unterschiedlichste Teile des Dateisystems, insbesondere auch mehrere Anwendungen kontrolliert zurückgesetzt werden können.

In vorteilhafter Weise läuft das Rücksetzverfahren atomar ab. Damit ist sichergestellt, dass das Rücksetzen entweder vollständig oder gar nicht durchgeführt wird. Somit können plötzliche Stromausfälle oder sonstige Fehler nicht dazu führen, dass der Datenträger in einem Zustand deaktiviert wird, aus dem er nicht wieder aktiviert werden könnte. Die Realisierung von atomaren Abläufen ist beispielsweise in der 5. Auflage des "Handbuch der Chipkarten" unter Punkt 13.10 "Atomare Abläufe" beschrieben.

Insbesondere ist der Datenträger eine SIM-Karte und das Rücksetzen der SIM erfolgt aufgrund eines Rücksetzkommandos eines Aktualisierungsservers einer entfernten Mobilfunkinstanz über ein Mobilfunknetz. Alternativ erfolgt das Rücksetzen bei mehrfachem Fehlschlagen eines Verbindungsaufbaus zu der Mobilfunkinstanz automatisch durch das Betriebssystem eines Endgeräts, welches die SIM betreibt oder des Teilnehmeridentifikationsmoduls selbst.

Als Mobilfunknetz wird in dieser Anmeldung eine technische Infrastruktur verstanden, auf der die Übertragung von Signalen für den Mobilfunk stattfindet. Dabei ist im Wesentlichen das Mobilvermittlungsnetz, in dem die Übertragung und Vermittlung der Signale zwischen ortsfesten Einrichtungen und Plattformen des Mobilfunknetzes stattfinden, sowie das Zugangsnetz (auch als Luftschnittstelle bezeichnet), in dem die Übertragung der Signale zwischen einer Mobilfunkantenne und einem mobilen Endgerät stattfindet, zu verstehen. Beispielsweise das "Global System for Mobile Communications", kurz GSM als Vertreter der sogenannten zweiten Generation oder das General Packet Radio Service, kurz GPRS und Universal Mobile Telecommunications System, kurz UMTS als Vertreter der sogenannten dritten Generation von Mobilfunknetzen seien hier beispielhaft erwähnt, wobei bei der dritten Generation das Mobilvermittlungsnetz um die Fähigkeit einer paketorientierten Datenübertragung erweitert wird, das Funknetz an sich aber unverändert ist.

Als Aktualisierungsserver wird in dieser Anmeldung ein Teil der Mobilfunkinfrastruktur verstanden, die aktuelle Dateiinhalte zu Dateien des Dateisystems auf dem Datenträger bereitstellt und an den Datenträger überträgt.

Die Rücksetzkommandos sollte zweckmäßigerweise nur in gesicherter Datenübertragung oder nur nach einer erfolgreichen Authentisierung der entfernten Mobilfunkinstanz bzw. des Endgeräts erfolgen können. Damit kann das Rücksetzen auf den Ausgangszustand auf die Instanzen beschränkt werden, die dafür auch autorisiert sind.

Die Kennzeichnung der Datei erfolgt insbesondere zu vorgegebenen Synchronisationszeitpunkten. Das Setzen der Synchronisationszeitpunkte wird wiederum durch ein Kommando einer Mobilfunkinstanz über ein Mobilfunknetz initiiert. Dies führt dazu, dass alle Dateiinhalte von, zu einem bestimmten Synchronisationszeitpunkt, aktualisierenden Daten mit einer gemeinsamen Versionsnummer in die Sicherungsdatei geschrieben werden. Bei Bedarf kann nun mit dieser Versionsnummer als Referenz der zum Synchronisationspunkt bestandene Ausgangszustand des Dateisystems bzw. des Betriebssystems wieder hergestellt werden.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Endgerät mit einer SIM-Karte in Mobilfunkkommunikation mit einem Aktualisierungsserver gemäß dem Stand der Technik
- Figur 2: Ein Blockschaltbild eines Datenträgers gemäß dem Stand der Technik
- Figur 3: Ein Dateisystem gemäß dem Stand der Technik
- Figur 4: Ein erfindungsgemäßes Dateisystem mit einer Sicherungsdatei zum Zurücksetzen des Dateisystems in einen Ausgangszustand
- Figur 5: Ein Aufbau einer Sicherungsdatei und das Kennzeichnen eines aktualisierten Dateiinhalts anhand des Dateideskriptors

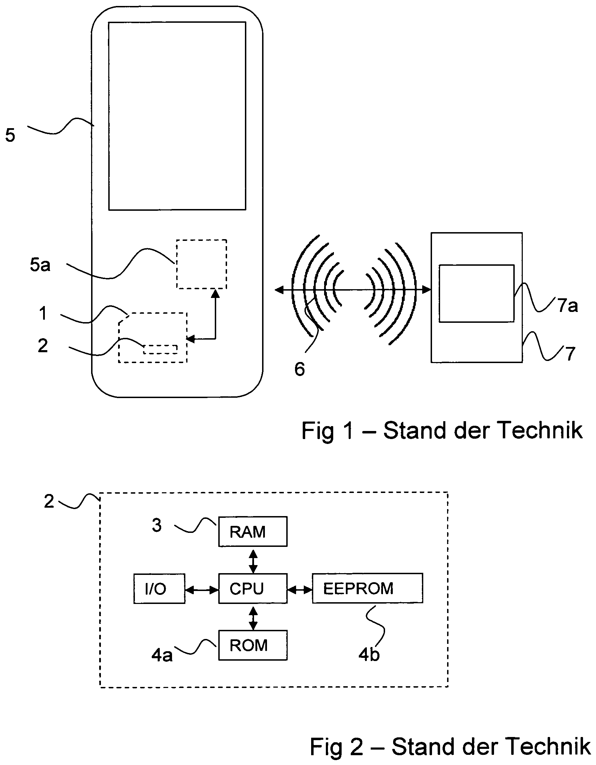

Figur 1 zeigt ein Endgerät 5, beispielsweise ein Smart Phone, ein PDA oder ein alternatives mobiles Endgerät 5 geeignet für eine Mobilfunkverbindung 6 mit einer Mobilfunkinstanz 7 gemäß dem Stand der Technik. Diese Mobilfunkinstanz weist wiederum einen Aktualisierungsserver 7a auf oder steht in Kommunikationsverbindung zu diesem Server 7a. Das Endgerät 5 weist weiterhin eine SIM-Karte 1 auf. In dieser SIM-Karte 1 ist ein integrierter Halbleiterchip 2 angeordnet. Das Endgerät weist wiederum einen internen Endgeräteschaltkreis 5a auf. Über eine nicht dargestellte Mobilfunkantenne empfängt das Endgerät 1 eine Aktualisierung eines Dateiinhalts 15 eines Teils der Dateisystems 8 auf der SIM 1. Diese Aktualisierung wird von dem Endgerät 5 an die SIM 1 übertragen. In der SIM wird von der ursprünglichen Datei 10 eine Kopie in Form einer Schattendatei 11 angelegt und die Datei 10 mit dem aktuellen Dateiinhalt 15 abgelegt.

In Figur 2 ist ein Datenträger mit seinen funktionellen Einheiten in Form eines Blockschaltbilds gemäß dem Stand der Technik dargestellt. Eine Input-Output Schnittstelle, die kontaktlos oder kontaktbehaftet ausgestattet ist, empfängt die in Figur 1 erwähnte Aktualisierung in Form einer APDU und übermittelt die Aktualisierung an eine Recheneinheit CPU. Die CPU wiederum hat wiederum Zugriff auf einen flüchtigen Speicherbereich 3 sowie nichtflüchtige Speicherbereiche 4. Da die Aktualisierung auch nach einer Deaktivierung der SIM 1 verfügbar sein soll, veranlasst das Betriebssystem des Datenträgers das Ablegen des aktuellen Dateiinhalts in den nichtflüchtigen mehrfachbeschreibbaren Speicherbereich 4b mit den in Figur 1 beschriebenen Maßnahmen.

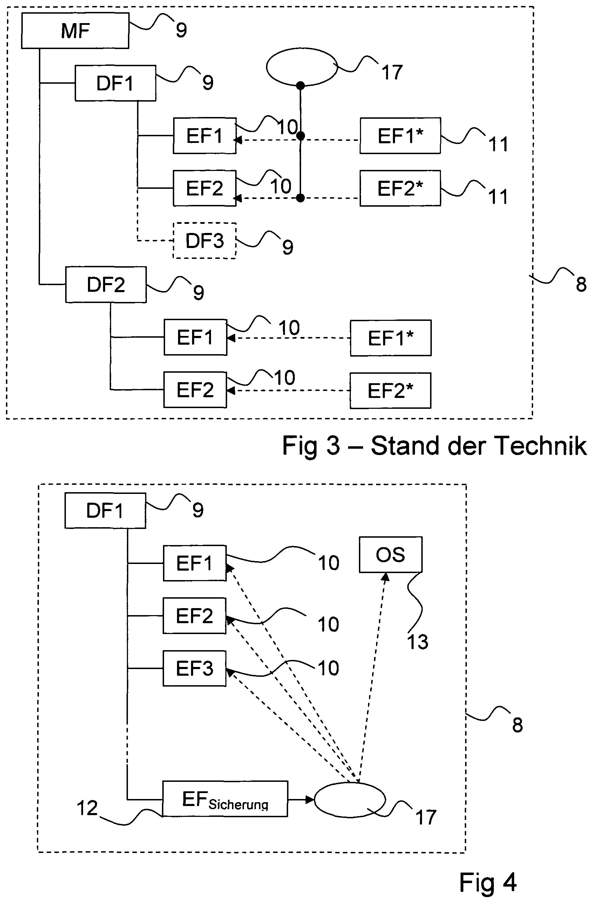

In Figur 3 ist ein Dateisystem 8 gemäß dem Stand der Technik dargestellt. Das Dateisystem weist ein Master File, MF und zwei Dedicated Files DF1, DF2 als Verzeichnisdateien 9 auf. Hierarchisch untergeordnet weist jedes DF zwei Elementary Files EF1, EF2 auf, die im Folgenden als Dateien 10 bezeichnet werden. Da die Dateien EF1 und EF2 des DF1 10 aktualisiert worden sind, existieren Schattendateien 11 dieser Dateien 10 als EF1* und EF2*, in denen die ursprünglichen Dateiinhalte 16 der Dateien 10 vor der Aktualisierung, also im Ausgangszustand des Dateisystems 8 enthalten sind. Wenn über die Mobilfunkinstanz 7 oder den internen Endgerätschaltkreis 5a ein Rücksetzkommando 17 erfolgt, werden diese Schattendateien 11 einfach an die Stelle der entsprechenden aktualisierten Dateien 10 kopiert, wodurch die aktualisierten Dateien EF1 und EF2 überschrieben werden. Von diesem Rücksetzen 17 unberührt bleiben die EF1 und EF2 der Verzeichnisdatei DF2, da hierzu keine Schattendateien angelegt worden sind. Wenn DF1 und DF2 in irgendeiner Weise interagieren, kann durch dieses Rücksetzverfahren nicht garantiert werden, dass die SIM 1 ordnungsgemäß funktioniert.

In Figur 4 wird eine erfindungsgemäße Ausführung vorgestellt. Das Dateisystem 8 kann hierbei genauso aufgebaut sein, wie in Figur 3, es kann alternativ aufgebaut sein. Wichtig ist, dass in dem Dateisystem eine Sicherungsdatei 12 eingebracht ist. Im Unterschied zu dem vorangegangenen Verfahren wird der ursprüngliche Dateiinhalt 16 nicht mehr in einer Schattendatei 11 abgelegt, sondern in der Sicherungsdatei 12 eingebracht. Die Sicherungsdatei 12 ist dabei in einer eingangs beschriebenen BER-TLV Struktur. Somit können unterschiedlich lange Dateiinhalte problemlos abgelegt werden. In Figur 4 sind nunmehr drei ursprüngliche Dateiinhalte 16 der Dateien EF1, EF2, EF3 in der Sicherungsdatei 12 abgelegt. Die aktualisierten Dateien 10 weisen wiederum eine Kennzeichnung 18 auf, anhand der erkannt wird, dass diese Datei 10 aktualisiert wurde und der aktuelle Dateiinhalt 15 mit dem ursprünglichen Dateiinhalt 16 nicht mehr übereinstimmt. Weiterhin sind in der Sicherungsdatei die ursprünglichen Konfigurationsparameter des Betriebssystems 13 im Ausgangszustand der SIM 1 abgelegt. Wenn nun ein Rücksetzkommando 17 erfolgt, wird das Dateisystem 8 nach Dateien 10 mit einer Kennzeichnung 18 durchsucht. Wird eine derartige Kennzeichnung 18 gefunden, wird anhand der Kennzeichnung 18 in der Sicherungsdatei 12 der ursprüngliche Dateiinhalt 16 gesucht und anschließend wird der aktuelle Dateiinhalt 15 mit dem ursprünglichen Dateiinhalt 16 überschrieben. Ähnlich wird mit den Konfigurationsparametern des Betriebssystems verfahren, die die aktuellen Konfigurationsparameter überschreiben. Dieses Überschreiben erfolgt für jede gekennzeichnete Datei 10.

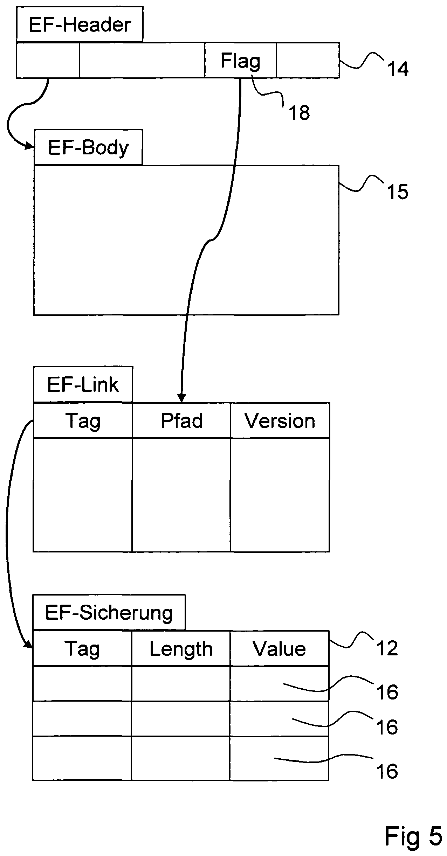

In Figur 5 wird nunmehr der Aufbau eines erfindungsgemäßen Dateideskriptors 14 gezeigt und dargestellt, wie anhand des Dateideskriptors 14 der ursprüngliche Dateiinhalt 16 über den aktuellen Dateiinhalt 15 geschrieben wird. Der Dateideskriptor weist an einer bestimmten Stelle eine Kennzeichnung 18 auf, beispielsweise ein Flag-Bit, welches in einem ersten logischen Zustand "0" anzeigt, dass die Datei 10 ursprüngliche Dateiinhalte 16 beinhaltet oder in einem zweiten logischen Zustand "1" anzeigt, dass die Datei 10 eine aktualisierte Version ist, sodass der Dateiinhalt 15 vom ursprünglichen Dateiinhalt 16 abweicht. Der Dateiinhalt 15, 16 ist wiederum in dem Datei-Body enthalten. Wird eine Datei 10 mit einer Kennzeichnung 18 gefunden, die anzeigt, dass der Dateiinhalt 15 vom ursprünglichen Dateiinhalt 16 abweicht, so wird einer Verlinkungsdatei EF-Link nach dem Pfad des ursprünglichen Dateiinhalts 16 gesucht. Anhand der in der EF-Link angegebenen Tag-Nummer wird nun in der Sicherungsdatei 12 der ursprüngliche Dateiinhalt 16 ausgewählt und der aktualisierte Dateiinhalt 15 überschrieben.

Die Verknüpfungsdatei EF-Link dient dazu, eine Verbindung zwischen den in der Sicherungsdatei gespeicherten ursprünglichen Dateiinhalten 16 und den entsprechenden Dateien 10 herzustellen.

Die Kennzeichnung 18 kann natürlich auch anders ausgestaltet sein, beispielsweise kann die Kennzeichnung mehrere Bits aufweisen, wodurch der ursprüngliche Dateiinhalt 16 direkt in der Sicherungsdatei 12 anhand des Tags gefunden werden kann.

Ein wichtiger Aspekt ist, dass der gesamte Rücksetzvorgang 17 atomar ausgeführt wird, d.h. entweder vollständig ausgeführt oder nicht ausgeführt wird. Das Betriebssystem weist dazu die notwendigen Mechanismen auf. Nach Aufruf einer bestimmten Betriebssystemfunktion wird der Rücksetzvorgang 17 eingeleitet, wobei ein anschließender Neustart der SIM sinnvoll ist um alle internen Zustände wieder korrekt herzustellen.

Das Verfahren zum Rücksetzen des Dateisystems wird auf alle Fälle mittels einer Betriebssystemfunktion ausgelöst, die das gesamte Verfahren durchführt. Der Aufruf des Verfahrens durch die Betriebssystemfunktion kann durch ein Kommando der Mobilfunkinstanz 7 mittels OTA oder auch durch das Endgerät 5 oder die SIM 1 selber ausgelöst werden.

Auslöser für ein SIM-seitiges Rücksetzkommando 17 können beispielsweise mehrfache zusammenhängende Neustartsequenzen der SIM sein, bei denen keine erfolgreiche Verbindung zu der Mobilfunkinstanz 7 etabliert werden konnten.

Das von der Instanz 7 kommende Kommando 17 ist zweckmäßigerweise nur in gesicherter Datenübertragung, beispielsweise durch Secure Messaging erfolgen oder kann nur nach einer erfolgreichen Authentisierung ausgeführt werden. Damit kann das Rücksetzen auf die Ursprungswerte auf die Instanzen beschränkt werden, die dafür auch autorisiert sind.

Eine Erweiterung der Ausführung stellt die Einführung von Synchronisationspunkten für die Rücksetzung dar. Dabei wird die SIM 1 mittels der Instanz 7 oder dem Endgerät 5 ein Kommando erhalten, dass die SIM 1 auffordert, einen Synchronisationspunkt zu erstellen. Dies führt dazu, dass alle ursprünglichen Dateninhalte 16, die bekanntermaßen durch das Kennzeichen eindeutig markiert sind, mit einer gemeinsamen Versionsnummer in die Sicherungsdatei 12 geschrieben werden. Der Algorithmus entspricht dem beschriebenen Algorithmus für das Zurücksetzen. Bei Bedarf kann dann mit dieser Versionsnummer als Referenz der zum Synchronisationspunkt X bestandene Ausgangszustand des Dateisystems 8 und des Betriebssystems wieder hergestellt werden.

### Bezugszeichenliste

- 1: Tragbarer Datenträger; SIM
- 2: Integrierter Schaltkreis
- 3: Flüchtiger Speicherbereich, RAM
- 4: Nichtflüchtiger Speicherbereich
4a Nichtflüchtiger einmalbeschreibbarer Speicher ROM
4b Nichtflüchtiger mehrfachbeschreibbarer Speicher, EEPROM, FLASH
- 5: Endgerät
- 5a: Interner Endgeräteschaltkreis
- 6: Mobilfunkverbindung, OTA
- 7: Mobilfunkinstanz,
- 7a: Aktualisierungsserver
- 8: Dateisystem
- 9: Verzeichnis Master File (MF), Dedicated File (DF)
- 10: Datei, Elementary File (EF)
- 11: Datei im Ausgangszustand, Schattendatei
- 12: Sicherungsdatei, EF_{Sicherung}
- 13: Betriebssystemkonfigurationsdatei
- 14: Datei-Deskriptor
- 15: Dateiinhalt
- 16: Ursprünglicher Dateiinhalt bei Ausgangszustand des Dateisystems
- 17: Rücksetzkommando
- 18: Kennzeichnung

## Patentansprüche

1. Verfahren zum Zurücksetzen eines Dateisystems (8) eines tragbaren Datenträgers (1) in einen Ausgangszustand, wobei:
- im Dateisystem (8) Dateien (10) enthalten sind,
- jede Datei (10) einen spezifischen Dateiinhalt (15,16) beinhaltet und
- alle Dateien (10), die vor dem Zurücksetzen des Dateisystems (8) einen vom Ausgangszustand des Dateisystems (8) abweichenden Dateiinhalt (15) erhalten haben, eine Kennzeichnung (18) aufweisen, mit den Verfahrensschritten:
- Durchsuchen des Dateisystems (18) nach Dateien (10) mit der Kennzeichnung (18);
- Überschreiben des Dateiinhalts (15) jeder gefundenen Datei (10) mit Kennzeichnung (18) mit einem ursprünglichen Dateiinhalt (16) dieser Datei, **dadurch gekennzeichnet,**
**dass:**
- der ursprüngliche Dateiinhalt (16) in einer Sicherungsdatei (12) des Dateisystems (8) abgelegt ist und diese Sicherungsdatei (12) die ursprünglichen Dateiinhalte (16) aller gekennzeichneten Dateien (10) des Dateisystems (8) im Ausgangszustand beinhaltet;
- die Kennzeichnung (18) einer Datei (10) bei Aktualisierung der Datei (10) erfolgt, wenn durch die Aktualisierung der Datei (10) der Dateiinhalt (15) der aktualisierten Datei (10) vom ursprünglichen Dateiinhalt (16) der Datei (10) im Ausgangszustand des Dateisystems (8) abweicht und
- im Falle eines bereits in der Sicherungsdatei (12) enthaltenen ursprünglichen Dateiinhalts derselben Datei (10), der ursprüngliche Dateiinhalt (16) in den in der Sicherheitsdatei (12) enthaltenen Dateiinhalt als weitere Version dieser Datei eingepflegt wird.

2. Verfahren gemäß Anspruch 1, wobei die Sicherungsdatei (12) eine BER-TLV Struktur aufweist.

3. Verfahren nach einem der vorhergehenden Ansprüche, wobei die ursprünglichen Dateiinhalte (16) der Sicherungsdatei (12) vom Betriebssystem des Datenträgers (1) verwaltet werden.

4. Verfahren nach einem der vorhergehenden Ansprüche, wobei auch Konfigurationsparameter des Betriebssystems des Datenträgers (1) beim Rücksetzen überschrieben werden.

5. Verfahren nach einem der vorhergehenden Ansprüche, wobei das Dateisystem (8) auch Verzeichnisdateien (9) aufweist und die Sicherungsdatei (8) alle ursprünglichen Dateiinhalte (16) aller Dateien (10) mit einer Kennzeichnung (18) innerhalb einer oder aller Verzeichnisdateien (9) im Ausgangszustand des Dateisystems (8) beinhaltet.

6. Verfahren nach einem der vorhergehenden Ansprüche, wobei die Kennzeichnung (18) der Datei (10) im Dateideskriptor (14) der Datei (10) erfolgt.

7. Verfahren nach einem der vorhergehenden Ansprüche, wobei das Rücksetzen atomar abläuft.

8. Verfahren nach einem der vorhergehenden Ansprüche, wobei der Datenträger (10) ein Teilnehmeridentifikationsmodul ist.

9. Verfahren nach Anspruch 8, wobei das Rücksetzen des Teilnehmeridentifikationsmodul aufgrund eines Rücksetzkommandos (17) eines Aktualisierungsservers (7a) einer entfernten Mobilfunkinstanz (7) über ein Mobilfunknetz (6) erfolgt oder das Rücksetzen bei mehrfachem Fehlschlagen eines Verbindungsaufbaus zu der Mobilfunkinstanz (7) automatisch durch das Betriebssystem (8) eines Endgeräts (5) oder des Teilnehmeridentifikationsmoduls erfolgt.

10. Verfahren nach einem der Ansprüche 8 oder 9, wobei die Kennzeichnung (18) der Datei (10) zu vorgegebenen Synchronisationszeitpunkten erfolgt und das Setzen der Synchronisationszeitpunkte durch ein Kommando eines Aktualisierungsservers (7a) einer Mobilfunkinstanz (7) über ein Mobilfunknetz (6) erfolgt.

## Claims

1. A method for resetting a file system (8) of a portable data carrier (1) to an initial state, wherein:
- in the file system (8) files (10) are contained,
- each file (10) contains a specific file content (15, 16) and
- all files (10) which have received a file content (15) deviating from the initial state of the file system (8) prior to the reset of the file system (8) have a tag (18), having the method steps of:
- searching the file system (18) for files (10) with the tag (18);
- overwriting of the file content (15) of each found file (10) with tag (18) with an original file content (16) of said file,
**characterized in that:**
- the original file content (16) is stored in a backup file (12) of the file system (8) and said backup file (12) contains the original file contents (16) of all marked files (10) of the file system (8) in the initial state;
- the tagging (18) of a file (10) is effected upon updating the file (10), when through the update of the file (10) the file content (15) of the updated file (10) deviates from the original file content (16) of the file (10) in the initial state of the file system (8) and
- in the case of an original file content of the same file (10) already contained in the backup file (12) the original file content (16) is loaded into the file content contained in the backup file (12) as a further version of said file.

2. The method according to claim 1, wherein the backup file (12) has a BER TLV structure.

3. The method according to any of the preceding claims, wherein the original file contents (16) of the backup file (12) are managed by the operating system of the data carrier (1).

4. The method according to any of the preceding claims, wherein also configuration parameters of the operating system of the data carrier (1) are overwritten upon reset.

5. The method according to any of the preceding claims, wherein the file system (8) also has directory files (9) and the backup file (8) contains all original file contents (16) of all files (10) with a tag (18) within one or all directory files (9) in the initial state of the file system (8).

6. The method according to any of the preceding claims, wherein the tagging (18) of the file (10) is effected in the file descriptor (14) of the file (10).

7. The method according to any of the preceding claims, wherein the resetting occurs atomically.

8. The method according to any of the preceding claims, wherein the data carrier (10) is a subscriber identification module.

9. The method according to claim 8, wherein the reset of the subscriber identification module is effected due to a reset command (17) of an updating server (7a) of a remote mobile communication entity (7) via a mobile communication network (6) or, in case of multiple failure of a connection establishment to the mobile communication entity (7), is effected automatically by the operating system (8) of a terminal (5) or of the subscriber identification module.

10. The method according to any of claims 8 or 9, wherein the marking (18) of the file (10) is effected at predetermined synchronization times and the setting of the synchronization times is effected by a command of an updating server (7a) of a mobile communication entity (7) via a mobile communication network (6).

## Revendications

1. Procédé de remise d'un système de fichiers (8) d'un support de données (1) portable à un état de départ, cependant que :
- dans le système de fichiers (8), des fichiers (10) sont contenus,
- chaque fichier (10) comporte un contenu de fichier (15, 16) spécifique, et
- tous les fichiers (10) ayant reçu, avant la réinitialisation du système de fichiers (8), un contenu de fichier (15) divergeant de l'état de départ du système de fichiers (8) présentent un marquage (18), comprenant les étapes de procédé :
- recherche, dans le système de fichiers (18), de fichiers (10) pourvus du marquage (18) ;
- écrasement du contenu de fichier (15) de chaque fichier (10) trouvé pourvu du marquage (18) avec un contenu initial de fichier (16) de ce fichier,
**caractérisé en ce que** :
- le contenu initial de fichier (16) est stocké dans un fichier de sauvegarde (12) du système de fichiers (8) et que ce fichier de sauvegarde (12) contient les contenus initiaux de fichiers (16) de tous les fichiers (10) marqués du système de fichiers (8) à l'état de départ ;
- le marquage (18) d'un fichier (10) a lieu lors de l'actualisation du fichier (10) quand, par l'actualisation du fichier (10), le contenu de fichier (15) du fichier (10) actualisé diverge du contenu de fichier (16) d'origine du fichier (10) à l'état d'origine du système de fichiers (8), et
- dans le cas d'un contenu initial de fichier, du même fichier (10), déjà contenu dans le fichier de sauvegarde (12), le contenu initial de fichier (16) est intégré, dans le contenu de fichier contenu dans le fichier de sauvegarde (12), en tant qu'autre version de ce fichier.

2. Procédé selon la revendication 1, cependant que le fichier de sauvegarde (12) présente une structure BER-TLV.

3. Procédé selon une des revendications précédentes, cependant que les contenus initiaux de fichiers (16) du fichier de sauvegarde (12) sont gérés par le système d'exploitation du support de données (1).

4. Procédé selon une des revendications précédentes, cependant qu'aussi des paramètres de configuration du système d'exploitation du support de données (1) sont écrasés lors de la réinitialisation.

5. Procédé selon une des revendications précédentes, cependant que le système de fichiers (8) comporte aussi des fichiers de répertoires (9), et que le fichier de sauvegarde (8) contient tous les contenus initiaux de fichiers (16), de tous les fichiers (10) pourvus du marquage (18), à l'intérieur d'un ou de tous les fichiers de répertoires (9) à l'état de départ du système de fichiers (8).

6. Procédé selon une des revendications précédentes, cependant que le marquage (18) des fichiers (10) a lieu dans le descripteur de fichier (14) du fichier (10).

7. Procédé selon une des revendications précédentes, cependant que la réinitialisation se déroule de manière atomique.

8. Procédé selon une des revendications précédentes, cependant que le support de données (10) est un module d'identification d'abonné.

9. Procédé selon la revendication 8, cependant que la réinitialisation du module d'identification d'abonné a lieu à la suite d'une instruction de réinitialisation (17) d'un serveur d'actualisation (7a) d'une instance éloignée de radiocommunication mobile (7) par l'intermédiaire d'un réseau de radiocommunication mobile (6), ou que la réinitialisation, en cas d'échecs multiples d'un établissement d'une connexion avec l'instance de radiocommunication mobile (7), est automatiquement effectuée par le système d'exploitation (8) d'un terminal (5) ou du module d'identification d'abonné.

10. Procédé selon une des revendications 8 ou 9, cependant que le marquage (18) du fichier (10) a lieu à des moments de synchronisation prédéterminés, et que la fixation des moments de synchronisation a lieu par une instruction d'un serveur d'actualisation (7a) d'une instance de radiocommunication mobile (7) par l'intermédiaire d'un réseau de radiocommunication mobile (6).
